(19) Europäisches Patentamt
European Patent Office
Office européen des brevets

(11) EP 0 518 976 B1

(12) **EUROPEAN PATENT SPECIFICATION**

(45) Date of publication and mention of the grant of the patent:
**22.05.1996 Bulletin 1996/21**

(21) Application number: **91906031.9**

(22) Date of filing: **06.03.1991**

(51) Int. Cl.$^6$: **A01N 59/20**

(86) International application number:
**PCT/AU91/00076**

(87) International publication number:
**WO 91/13552 (19.09.1991 Gazette 1991/22)**

(54) **FUNGICIDAL COMPOSITIONS FOR APPLICATION TO PLANTS**
FUNGIZIDE ZUSAMMENSETZUNGEN ZUR ANWENDUNG BEI PFLANZEN
COMPOSITIONS FONGICIDES DESTINEES A ETRE APPLIQUEES A DES PLANTES

(84) Designated Contracting States:
**AT BE CH DE DK ES FR GB GR IT LI LU NL SE**

(30) Priority: **06.03.1990 AU 8972/90**

(43) Date of publication of application:
**23.12.1992 Bulletin 1992/52**

(73) Proprietor: **TATE, David**
**Hillston, NSW 2675 (AU)**

(72) Inventor: **TATE, David**
**Hillston, NSW 2675 (AU)**

(74) Representative: **Moreland, David, Dr. et al**
**Fitzpatricks,**
**4 West Regent Street**
**Glasgow G2 1RS (GB)**

(56) References cited:

| | |
|---|---|
| **EP-A- 0 005 991** | **AU-A- 6 589 890** |
| **CH-A- 166 782** | **FR-A- 2 543 796** |
| **GB-A- 1 585 967** | **US-A- 4 193 993** |
| **US-A- 4 590 208** | |

- **DERWENT ABSTRACT Accession No. 88-089171/33, Class P34, JP,A, 63-041408 (NIPPON ZEON KK) 22 February 1988 (22.02.88).**
- **DERWENT ABSTRACT Accession No. 87-217091/31, Class P15, JP,A, 62-142559 (SHOKO KAGAKU KENKYU) 25 June 1987 (25.06.87).**
- **PATENTS ABSTRACTS OF JAPAN, C-409, page 13, JP,A, 61-233606 (RIKAGAKU KENKYUSHO) 17 October 1986 (17.10.86).**
- **PATENTS ABSTRACTS OF JAPAN, C-134, page 154, JP,A, 57-131708 (RIKAGAKU KENKYUSHO) 14 August 1982 (14.08.82).**
- **PATENTS ABSTRACTS OF JAPAN, C-201, page 8, JP,A, 58-162508 (TEIJIN K.K.) 27 September 1983 (27.09.83).**
- **PATENTS ABSTRACTS OF JAPAN, C-78, page 3289, JP,A, 53-109910 (KAKEN KAGAKU K.K.) 26 September 1978 (26.09.78).**

EP 0 518 976 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

Printed by Rank Xerox (UK) Business Services
2.11.7/3.4

## Description

Technical Field

The invention concerns a fungicidal composition for application to plants. The fungicidal composition comprises a fungicide in admixture with another substance that produces a positive chemotaxic response from the myco-pathogen, wherein the fungicide is a copper-based fungicide, that is, a salt of a copper (II) complex, the cupric tetra ammine, $Cu(NH_3)_4^{2+}$ complex. $Cu(NH_3)_4^{2+}$ is a new fungistat which can be used as a fungicide with the chemotactic ingredient. The ammonia ligands of the copper (II) complex also have positive chemotaxis. The invention also relates to a method of combatting fungal and other myco-pathogenic infections in plants.

Background Art

Copper based fungicides presently in use in agriculture, derive their fungicidal activity from copper's broad antimicrobial spectrum of activity. Typically, known copper based fungicides include formulations of the following materials: copper sulphate and water ($CuSO_4.H_20$), copper sulphate and calcium hydroxide and water ($CuSO_4.Ca(OH)_2.H_20$), copper sulphate and sodium hydroxide and water ($CuSO_4.NaOH.H_20$), cupric hydroxide ($Cu(0H)_2$), and copper oxychloride (CuOCl), for example.

US Patent 4,193,993 relates to a composition in the form of an aqueous solution of a compound of a preservative metal and certain organic acids solubilised by means of ammonia or an ammonium compound. This document discloses cuprammonium - fatty acid compositions. EP 0005991 relates to a water-based fungicidal composition of low phytotoxicity containing cuprammonium complexes of carboxylic acids and an alkaline earth metal, zinc or manganese carboxylates. This document also utilises certain fatty acids with the metallic toxicant. It has been demonstrated in the field of agricultural pest control that certain fatty acids have pesticidal activity, note US Patent 2,852,426 and US Patent 5,030,658. It would therefore be reasonable to expect a synergism of a copper salt and an organic acid such as these. Patents describing this are US Patent 3,900,504, US Patent 4,020,180, Japanese Patent 57-131708 and Japanese Patent 61-233606.

Most of these known copper based fungicides have their fungicidal activity inhibited by the close association or direct bonding of ions of elements that reduce the number of free active sites on the copper (II) ion. Moreover, most of the known copper based fungicides can form insoluble compounds, on contact with other substances in the environment, resulting in precipitation of the copper compound. There are difficulties and increased costs arising from their application, and especially with unwanted post harvest residues containing copper.

A major difficulty with the known art is the presence of sodium or chlorine or other anions such as hydroxide or sulphate within the copper based fungicides that restrict microbial (i.e. fungal) activity. The presence of these anionic molecules, being largely of a negatively chemotaxic nature, results in a biochemical inhibition of the surface microflora on the plant surface. The effect of this is to reduce the effectiveness of the applied copper as the resting innoculum is forced to hibernate through the unfavourable conditions.

A further problem is caused by the reduced level of Cu(II) activity after application to the plant surface, and the disrupted biological signals on the plant. The application of the fungicide at a level necessary to inhibit the inoculum can subsequently cause phytotoxicity symptoms in many crops. Thus, the use of copper based fungicides is limited and even prevented, in some crops. Similar problems occur with other types of fungicides.

No copper based or other types of fungicides are specifically designed to positively alter plant surface conditions as a means of maximising the eradicant effect of the copper (II) ions, or other active ingredients that are present. Previously, no attempt has been made to control the fungal activity by encouraging spore germination in the presence of a fungistat.

Thus, there is a need for an improved copper based or other formulation of a fungicide which would additionally allow incorporation of substances to increase fungal activity, specifically by encouraging fungal spore germination and hence enabling greater control of the infection.

Disclosure of Invention

A first aspect of the present invention provides a water soluble fungicidal composition, which is adapted to be applied to plant surfaces as by spraying and which will remain soluble on application to a said plant surface, said composition comprising:

(a) a fungicide selected from at least one salt of $Cu(NH_3)_4^{2+}$, together with
(b) at least one substance that produces a positive chemotactic response from myco-pathogens, said substance being selected from:

(i) one or more organic acids effective to prevent the formation of insoluble copper compounds on application to a plant surface and thereby maintain the composition in solution, the organic acid(s) being selected from the group consisting of citric acid and malic acid and being capable of maintaining said composition in solution in admixture with

(ii) at least one further compound selected from saccharides and polysaccharides, and salts and derivatives thereof.

This invention, therefore, provides a copper (II) based fungicide, together with one or more substances that produce a positive myco-chemotoxic response from the target pathogen.

The cupric tetra ammmine salt used in making the soluble complex of this invention is documented in Mellor's Modern Inorganic Chemistry, Parkes (ED) 1952, Lonmans, Green & Co Ltd (London) pp616-617. If carbohydrates are available, most fungi can synthesise their own proteins by utilising inorganic sources of nitrogen. The increased incidence of plant diseases associated with high nitrogen fertiliser usuage and the micro-flora's essential requirement for nitrogen for development and reproduction, indicate the suitability of a nitrogenous ligand for the copper (II) ion or for the other active ingredients possible in the invention.

Chemotaxis, also known as chemotropism, describes the attraction of living organisms to chemical stimuli, whereby the cells are attracted, if there is positive chemotaxis, or otherwise repelled, if there is negative chemotaxis. Chemotactic substances are often acids, alkalis or other substances that exhibit chemical activity to living protoplasm.

There is ample evidence of a consistant positive response by micro organisms to food chemicals such as organic acids, sugars and sugar polymers, when these chemicals are provided in concentrations equivalent to that found on or in the host. For instance this response is not species specific, note papers by: Kosuge, T and W.B. Hewitt 1964. "Exudates of Grape Berries and Their Effect on Germination of Conidia of Botrytis cinerea". Phytopathology 167-172. Paynter, V.A. & Jen, J.J. 1974. "Pectic enzymes in ripening peaches infected with Monilinia Fructicola", J. of Food Sci 39(6), 1195-1199.

The copper (II) ion is negatively myco-chemotactic. Therefore, to encourage the pathogenic inoculum to come in contact with the applied fungicide composition, the association of the copper (II) ions with nitrogen containing substances is ideal, as one solution to this problem.

Nitrogen containing compounds and/or acids such as "fruit" acids, and sugars, and their derivatives, are used as sources of cellular materials and energy. These are metabolic stimulants encouraging the microflora to germinate and forage. The amount of microbial activity will also depend on temperature and moisture at the time of application.

When preparing the fungicide and during its application, the invention, in a preferred form utilises a soluble ligand, especially ammonia, for the copper (II) ions in preference to copper hexahydrate $(Cu(H_20)_6)^{2+}$ which is the previously known copper fungistat. Upon application, the four ammonia ligands are gradually substituted by water, then by the acid carboxyls thereby allowing sites on the $Cu^{2+}$ ions to be liberated within solution, on the plant surface.

The invention concerns the inclusion of positive chemotactic substance(s) to the formulation.

The invention utilises the bond between $Cu^{++}$ ions and $NH_3$ to form the square planar cupric tetra amine molecule $Cu(NH_3)_4{}^{2+}$. The complex may be hydrated to form $Cu(NH_3)_4(H_2O)_2{}^{2+}$ ions. The complex is similar to that formed by free copper (II) in water. Salts of copper (II) tetra ammine such as $Cu(NH_3)_4(NO_3)_2$,$Cu(NH_3)_4SO_4$, and $Cu(NH_3)_4(OH)_2$ can be used in the compositions of the invention.

The ligands such as tetra ammine components of the $Cu(NH_3)_4{}^{2+}$ plant metabolic complex ideally hydrolyse forming ammoniums within a sufficient period of time to provide micro-pathogens with their nutritional stimulants, also making available active sites on the copper (II) ions.

Further, nitrogen containing molecules within the plant tissues and upon the plant surface are used by parasitic organisms for their own functions. For this reason it is believed that the tetra ammine complex does not discourage parasitic organisms from germinating in the presence of Cu(II) ions.

The $NH_3$ chemotactic ligand present is also a useful source of plant foliar nitrogen nutrition.

The composition is a new fungicidally effective substance, and therefore the invention is also directed to compositions containing the complex, together with a suitable anion, and other diluents, carriers or additives usual in fungicidal compositions. The compositions of the invention can be applied to the plants in any conventional manner. For example, spraying or dusting are suitable such methods.

According to the second aspect of the present invention there is provided a method of treating of preventing mycopathogenic attack on a plant which comprises applying to the plant, as by spraying, an effective amount of a water soluble fungicidal composition,

(a) a fungicide selected from at least one salt of $Cu(NH_3)_4{}^{2+}$, together with

(b) at least one substance that produces a positive chemotactic response from myco-pathogens, said substance being selected from:

(i) one or more organic acids effective to prevent the formation of insoluble copper compounds on application to a plant surface and thereby maintain the composition in solution, the organic acid(s) being selected from the

group consisting of citric acid and malic acid and being capable of maintaining said composition in solution in admixture with

(ii) at least one further compound selected from saccharides and polysaccharides, and salts and derivatives thereof.

The preparation of cupric tetra amine compounds of the invention can be carried according to the following reaction scheme.

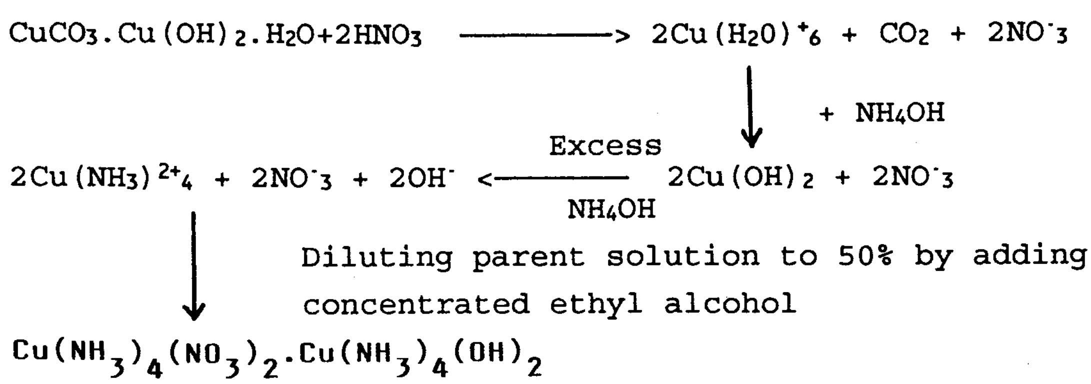


Thus the improved fungicides of the present invention overcome difficulties of conventional, especially, copper based, fungicides by directing copper (II) ions to the target fungal infection, in a medium of the growth substances which are used by the microbe, and also preferably supplying nutrient nitrogen in the form of ammonia that is bound to the copper, for example.

In this way the fungicide formulations of the present invention, by incorporating microbial foodstuffs, specific compounds used as food sources for respiration as discussed above, will control fungal infections by encouraging spore germination and foraging.

A further embodiment of the invention is the inclusion of ingredients that prevent the formation of insoluble copper compounds at the time of application, on the plant surface while excluding those materials likely to interfere with the activity of copper (II) ions. Thus the copper (II) ion remains more mycologically active.

The formulations of the invention are generally soluble when they are applied, and later when they are on plant surfaces. By remaining soluble they avoid problems such as blocking equipment application and not precipitating in spraying devices, for instance. Post harvest residue problems common to the known art are also eliminated, by using the formulations of the invention.

## MODES FOR CARRYING OUT THE INVENTION

The invention is now described with reference to examples.

### Example 1

(a) A formulation of the invention is prepared as follows:

| | |
|---|---|
| $Cu(NH_3)_4(NO_3)_2$ [Cupric tetra ammine nitrate] | 256 gm |
| $C_6H_8O_7$ Citric acid (crystalline) | 144 gm |
| $C_6H_{12}O_6$ Dextrose (crystalline) | 60 gm |
| The total amount of the formulation produced is | 460 gm |

To the formulation was added 100 litres of water and a surfactant. This solution is then sprayed on to lemon scab (Elsinoe faucettii) susceptible lemon foliage and fruitlets to the point of run-off, every ten days, while both

weather, and crop conditions, are favourable to infection. The present invention has the advantage that only 64 gram of elemental copper is applied as opposed to 100-150 grams of copper per 100 litres of $H_2O$ in the known technology.

(b) A second formulation was prepared as described in part (a) above, as follows:

| | |
|---|---|
| $Cu(NH_3)_4(NO_3)_2$ [Cupric tetra ammine nitrate] | 250 gm |
| $C_6H_8O_7$ Citric acid (crystalline) | 60 gm |
| $C_6H_{12}O_6$ Dextrose (crystalline) | 140 gm |
| The total amount of the formulation produced is | 450 gm |

Example 2

(a) A further formulation was prepared, suitable for stone fruit whilst in foliage:

| | |
|---|---|
| $Cu(NH_3)_4SO_4.Cu(NH_3)_4(OH)_2$ | 133 gm |
| Citric acid | 87 gm |
| Malic acid | 10 gm |
| Maltose | 40 gm |
| Fungicide per 100 L $H_2O$ | 270 gm |

The equivalent of 43 gm of electrical copper is applied to the control shot hole, rust and brown rot, between growth flushes in October and again in December.

(b) A second formulation was prepared in accordance with the method described in part (a), as follows:

| | |
|---|---|
| $Cu(NH_3)_4SO_4.Cu(NH_3)_4(OH)_2$ | 130 gm |
| Citric acid | 20 gm |
| Malic acid | 50 gm |
| Galactose | 250 gm |
| Fungicide per 100 L $H_2O$ | 450 gm |

Example 3

The formulations for the production of a cupric tetra ammine can be prepared, for example, by the following reaction scheme.

Copper carbonate is dissolved in dilute nitric acid and then ammonia is added until cupric hydroxide precipitates. The continued addition of ammonia results in the dissolution of the cupric hydroxide to produce cupric tetra ammine in solution.

The addition of 50% by volume of ethyl alcohol to the solution and evaporation, yields, a blue crystalline substance of $Cu(NH_3)_4(NO_3)_2$, in the nitrate form. An amount of $Cu(NH_3)_4(OH)_2$ may also be present.

Example 4

To understand the invention further an investigation of the fungal disease wheat rust Puccinia Striaformis was conducted.

The host plan, wheat Triticum aestivum stores its soluble carbohydrates in its stem internodes as fructans. Invasion by the P. straiaformis fungi utilises these stored carbohydrates for fungal growth and reproduction (see "Fructans polymerised and depolymerised in the internodes of winter wheat", Blacklow, Darbyshire and Phelong, Plant Science Letters Vol.36 1984 p213-218.) These researchers found that the stem internodes of wheat stored fructose units as fructans polymerised to a Degree of Polymerisation (D.P.) of 9. Fructans of a D.P. equal to or greater than 5 are stored at twice the concentration of those of a D.P. of 3 and 4. These researchers found that at grain filling the fructans are depolymerised to fructose and the sugars are utilised in the grain development.

The aeciospore of the P. striaformis germinates freely in moisture on the host plants surface. The growth of a pre-haustoria by most spores occurs at night and a patterned motile development of this pre-haustoria towards a stomate occurs. This motile development resembles an indirect migration to the stomate and is either a tactile response or a response to $CO_2$ gradients from stomatal emissions. Once at the stomate the fungi gathers itself above the unopened stomate as an appressoria, and at first light as the stomate opens the pathogen enters and forms within a sub-stomatal vesicle. Penetration of the parenchyma and invasion takes place.

The new fungicidal compositions of the invention aim to destroy the germinating aeciospore and motile pre-haustoria prior to the development of the appressoria. The means involves the application of the polymerised carbohydrates to the surface of the plant with an initially disguised fungistat. The effects on the pathogen are four fold. Firstly, the applied polymers effectively extend the surface solution producing a net-like polymer structure. This polymer structure applied to the plant surface inhibits the tactile development to the stomate by the motile pre-haustoria.

Secondly, in response to the polymerised carbohydrates (either within or externally); the pathogen employs beta amylase and then maltose enzymes from its enzyme resource. Mucolytic or hemicellulase enzymes necessary for host penetration from the sub-stomatal vesicle may well be compromised. Thirdly, the excipient quality of the sugar polymers aids in the introduction of the fungistat, and finally, the externally induced enzyme activity from the pre-haustoria in the plant surface solution and the $Cu^{2+}$ ions liberated from the $Cu(NH_3)_4{}^{2+}$ molecule disrupts disease progression.

A small quantity of citric acid (0.03%) is included to prevent reduction of the $Cu^{2+}$ ion by the reducing sugars that make up the polymers. 30gm $C_6H_8O_7$/100 L $H_2O$. A 0.33% $Cu^{2+}$ concentration is applied with 118gm $Cu(NH_3)_4$ $SO_4$/100 L $H_2O$.

The formulation, therefore to be applied per 100 L of $H_2O$ is as follows:

| | | |
|---|---|---|
| Cupric tetra ammine sulphate | $Cu(NH_3)_4SO_4$ | 118gm |
| Citric Acid | $C_6H_8O_7$ | 30gm |
| L-Glukamic Acid | $C_5H_7O_4(NH_2)$ | 20gm |
| L-Aspartic Acid | $C_4H_5O_4(NH_2)$ | 16gm |
| DL-Alanine | $C_3H_5O_2(NH_2)$ | 12gm |
| Palmitic Acid | $C_6H_{12}O_2$ | 60gm |
| Dextrin (D.P. 4 to 9) | $C_6H_{12}O_6$ | 200gm |

Fructans can be sourced as inulins and applied at 0.15% or 150gms/100 litre of $H_2O$. Alternatively dextrins which are chemically similar to fructans and considerably cheaper can be used. A 90% soluble dextrin of a D.P. 4 to 9 containing not more than 5% reducing sugar and less than 1% alcohol solubles can be applied at 0.2% of solution 200gm/100 L $H_2O$.

The inclusion of a crop spray oil applied in accordance with manufacturers recomendations will improve coverage.

Example 5

A further investigation was conducted of Citrus Brown Rot: Causal organism Phytopthora Citropthora. A formulation was prepared with respect to overcoming the introduction of P. Citropthora zoospores to the vicinity of citrus host tissues:

| Components | Per 100L $H_2O$ |
|---|---|
| $Cu(NH_3)_4SO_4$ | 115 gm |
| Citric Acid (Anhydrous) | 30 gm |
| DL-Malic Acid (Free Acid) | 90 gm |
| Sucrose (Crystalline) | 210 gm |
| D-Fructose (Crystalline) | 250 gm |
| D+Glucose (Anhydrous) | 180 gm |
| L-Aspartic (Cryst. Free Acid) | 16.5 gm |
| L-Glutamic (Cryst. Free Acid) | 18.5 gm |
| Hesperidin | 40 gm |
| Rutin | 10 gm |

The application of such a large number of constituents in amounts consistent with those found within the citrus host is aimed at combatting a broad range of fungal infections, by creating a plant surface solution which is chemotactically confusing to any pathogen.

Crop spray oil should also be included when applying the formulation.

Example 6

A formulation was prepared for treatment of Peach Brown Rot. causal organism Monilinia Fructicola. The formulation of the invention was prepared as follows:

| Components | Per 100L $H_2O$ |
|---|---|
| Na poly pectate | 400 gm |
| $Cu(NH_3)_4SO_4$ | 90 gm |
| DL-Malic Acid | 50 gm |
| Sucrose | 120 gm |
| Fructose | 40 gm |
| L-Aspartic Acid | 20 gm |

This formulation was directed to preferential stimulation of M. fructicola. The waxy cuticle of the peach is hydrophillic in nature and the application of 250ml of crop spray oil per 100 L $H_2O$ will improve coverage.

## Claims

**1.** A water soluble fungicidal composition, which is adapted to be applied to plant surfaces as by spraying and which will remain soluble on application to said plant surface, said composition comprising:

(a) a fungicide selected from at least one salt of $Cu(NH_3)_4^{2+}$, together with
(b) at least one substance that produces a positive chemotactic response from myco-pathogens, said substance being selected from:

(i) one or more organic acids effective to prevent the formation of insoluble copper compounds on application to a plant surface and thereby maintain the composition in solution, the organic acid(s) being selected from the group consisting of citric acid and malic acid and being capable of maintaining said composition in solution in admixture with

(ii) at least one further compound selected from saccharides and polysaccharides, and salts and derivatives thereof.

2. The fungicidal composition of claim 1, wherein the further compound is selected from dextrose, maltose and galactose.

3. A method of treating or preventing myco-pathogenic attack on a plant which comprises applying to the plant, as by spraying, an effective amount of a water soluble fungicidal composition, said composition comprising:

(a) a fungicide selected from at least one salt of $Cu(NH_3)_4^{2+}$, together with
(b) at least one substance that produces a positive chemotactic response from myco-pathogens, said substance being selected from:

(i) one or more organic acids effective to prevent the formation of insoluble copper compounds on application to a plant surface and thereby maintain the composition in solution, the organic acid(s) being selected from the group consisting of citric acid and malic acid and being capable of maintaining said composition in solution in admixture with
(ii) at least one further compound selected from saccharides and polysaccharides, and salts and derivatives thereof.

## Patentansprüche

1. Eine wasserlösliche Fungizid-Zusammensetzung, bestimmt zur Anwendung auf Pflanzenoberflachen, etwa durch Besprühen, die bei der Anwendung auf genannten Pflanzenoberflächen wasserlöslich bleibt, wobei die besagte Zusammensetzung enthält:

(a) Ein Fungizid, ausgewählt von wenigstens einem Salz des $Cu(NH_3)_4^{2+}$, zusammen mit
(b) wenigstens einer Substanz, die eine positive chemotaktische Antwort auf Myco-Pathogene hervorruft, wobei die besagte Substanz ausgewählt ist von:

(i) einer oder mehrerer organischer Säuren, wirksam zum Verhindern der Bildung wasserunlöslicher Kupferverbindungen bei Anwendung auf besagten Pflanzenoberflächen und zum Halten der Zusammensetzung in Lösung, wobei die organischen Säuren ausgewählt sind aus der Gruppe, die Zitronensäure und Apfelsäure umfaßt und fähig sind, besagte Verbindung in Lösung zu halten, beim Zumischen von
(ii) wenigstens einer weiteren ausgewählten Komponente von Sacchariden und Poly-Sacchariden sowie deren Salzen und Derivaten.

2. Fungizid-Zusammensetzung nach Anspruch 1, **dadurch gekennzeichnet**, daß die weitere Komponente aus Dextrose, Maltose und Galaktose ausgewählt ist.

3. Verfahren zur Behandlung oder Vorbeugung myko-pathogenischen Angriffs auf Pflanzen, welche die Anwendung einer bestimmten Menge der wasserlöslichen Fungizid-Zusammensetzung auf Pflanzen, etwa durch Besprühen, umfaßt, wobei die Zusammensetzung besteht:

(a) Aus einen) Fungizid, ausgewählt von wenigstens einem Salz des $Cu(NH_3)_4^{2+}$, zusammen mit
(b) wenigstens einer Substanz, deren Produkte eine positive chemotaktische Antwort auf Myko-Pathogene hervorruft, wobei diese Substanz ausgewählt ist aus

(i) einer oder mehrerer organischer Säuren, dazu bestimmt, die Bildung von wasserunlöslichen Kupferkomponenten beim Einsatz an Pflanzen zu verhindern und dabei die Zusammensetzung in Lösung zu halten, wobei die organischen Sauren ausgewählt sein sollen aus der Gruppe, die Zitronen- und Apfelsäuren enthält, und die fähig sein soll, besagte Zusammensetzung in Lösung zu halten, beim Zumischen von
(ii) wenigstens einer weiteren ausgewählten Komponente von Sacchariden und Poly-Sacchariden sowie deren Salzen und Derivaten.

## Revendications

1. Composition fongicide soluble dans l'eau, destinée à être appliquée à la surface de plantes, notamment par pulvérisation, et qui demeure soluble à l'application à cette surface de plantes, comprenant :

   (a) un fongicide choisi à partir d'au moins un soi de $Cu(NH_3)_4^{2+}$, on même temps que
   (b) au moins une substance ayant une réaction chemotactique positive vis-à-vis des mycopathogènes, cette substance étant choisie entre :

      (i) un ou plusieurs acides organiques exerçant une action préventive efficace sur la formation de composés insolubles du cuivre à l'application à la surface des plantes, et maintenant ainsi la composition en solution, le(s)dit(s) acides(s) organique(s) étant choisi(s) dans le groupe constitué par l'acide citrique et l'acide malique et étant capable de maintenir cette composition en solution en mélange avec
      (ii) au moins un composé supplémentaire choisi parmi les saccharides et les polysaccharides, leurs sels et leurs dérivés.

2. Composition fongicide selon la revendication 1, dans laquelle le composé supplémentaire est choisi entre le dextrose, le maltose et le galactose.

3. Méthode de traitement ou de prévention des attaques myco-pathogènes sur une plante, consistant à appliquer à la plante, notamment par pulvérisation, une quantité efficace d'une composition fongicide soluble dans l'eau, cette composition comprenant :

   (a) un fongicide choisi à partir d'au moins un sel de $Cu(NH_3)_4^{2+}$, en même temps que
   (b) au moins une substance ayant une réaction chemotactique positive vis-à-vis des mycopathogènes, cette substance étant choisie entre :

      (i) un ou plusieurs acides organiques exerçant une action préventive efficace sur la formation de composés insolubles du cuivre à l'application à la surface d'une plante, et maintenant ainsi la composition en solution, le(s)dit(s) acides(s) organiques(s) étant choisi(s) dans le groupe constitué par l'acide citrique et l'acide malique, et étant capable de maintenir cette composition en solution en mélange avec :
      (ii) au moins un composé supplémentaire choisi parmi les saccharides et les polysaccharides, leurs sels et leurs dérivés.